# EUROPEAN PATENT SPECIFICATION

(11) **EP 2 539 189 B1**
(45) Date of publication and mention of the grant of the patent: **19.07.2017**
(21) Application number: 11747789.3
(22) Date of filing: 08.02.2011
(51) Int. Cl.: B60R 25/10

(54) **MONITORING SYSTEM FOR VEHICLES**
ÜBERWACHUNGSSYSTEM FÜR FAHRZEUGE
SYSTÈME DE SURVEILLANCE POUR VÉHICULES

(30) Priority: 25.02.2010 SE 1050179
(43) Date of publication of application: 02.01.2013
(73) Proprietor: Scania CV AB, 151 87 Södertälje (SE)
(72) Inventor: CLAEZON, Fredrich, SE-13953 Värmdö (SE); SUNDELL, Peter, SE-644 35 Torshälla (SE)
(74) Representative: Scania CV AB
(86) International application number: PCT/SE2011/050140
(87) International publication number: WO 2011/105951

(56) References cited:
- WO-A1-90/04529
- GB-A- 2 263 005
- GB-A- 2 266 799
- US-A1- 2005 283 286
- US-A1- 2006 250 230
- US-A1- 2007 018 798

## Description

### Field of the invention

The present invention relates to a monitoring system according to the preamble of the independent claim. The invention is particularly applicable to trucks but may also be applied to buses, passenger cars and other motor vehicles.

### Background to the invention

Breaking into and theft from trucks, trailers and the like has now become a major problem due to the relatively unprotected way in which valuable goods are currently transported by road. Such thefts and break-ins result in major costs to hauliers and insurance companies. They also contribute to drivers feeling unsafe when sleeping in trucks. Locking and alarm systems are commonly used to protect vehicles from break-ins and thefts but today's systems are subject to limitations which make it difficult to achieve satisfactory protection.

The current solution of shell protection for trucks is usually based on the cab's doors and hatches being monitored by the alarm system. In certain cases the cargo space door is also covered by this monitoring and the shell protection solution detects intrusion when any of the cab's doors or hatches is opened. This is a solution currently offered by Scania and other truck manufacturers.

There are many different types of proximity sensor which detect objects without touching them and can be used in this context. An example of such a sensor is a capacitive proximity sensor, which detects objects on the basis of their dielectric nature and has many areas of application which utilise this characteristic. Other examples of proximity sensors are ultrasound sensors, Doppler sensors, radar sensors and photoelectric and inductive proximity sensors.

US-2006/0250230 refers to a method for operation of a monitoring and alarm device for parked vehicles. The device comprises a sensor unit for determining the distance between the vehicle and an approaching object within an active zone, and a reaction device connected to a control unit which is activated when the object comes close to the vehicle. The active zone is divided into at least an outer first subzone and an inner second subzone. The reaction device is activated progressively with regard to quantity, type, intensity and/or sequence in the first subzone as compared with its activation with regard to quantity, type, intensity and/or sequence in the second subzone.

WO-2008/121041 refers to a monitoring and communication system for a vehicle, in particular for a long vehicle. Lamp units, e.g. warning lamps and position lamps, on the vehicle are provided with monitoring sensors and communication units to wirelessly convey output signals from the sensors to a central unit. Each sensor defines a monitoring zone for detection of an object or movement in that zone. The sensors may for example be ultrasound sensors, Doppler sensors or radar sensors. WO-2008/121041 refers to solving the problem of how the sensors for monitoring a vehicle communicate with one another, particularly in the case of long vehicles. The solution is to provide a wireless network which can easily be supplemented by further lamp units situated, for example, on trailers.

The alarm systems currently used are often static and set for just one scenario. This means that they always detect and warn of intrusion in the same way whatever the circumstances. As circumstances may differ greatly, this means that the alarm system may not always function optimally.

The object of the present invention is to propose an improved monitoring system which allows dynamic adjustment of detection and warning strategies according to prevailing conditions in order to achieve optimised functioning, minimise the number of false alarms and to simplify the monitoring system and win greater driver acceptance of it.

### Summary of the invention

The above objects are achieved with the invention defined by the independent claim.

Preferred embodiments are defined by the dependent claims.

The present invention thus relates to a monitoring system which implements adaptive detection and warning strategies for alarms on vehicles, e.g. trucks or buses. Signals from sensors already provided and other available sources of information are used to identify different states in which different intrusion detection strategies are used and how warnings of intrusion are communicated in those states. The sensitivity of the alarm system is thus adjusted according to, for example, how valuable the cargo is or how unsafe the area where the truck is parked is considered to be. Different strategies may also be applied to different zones of the vehicle, e.g. shell protection, cab, fuel tank and hybrid batteries.

A major advantage of the monitoring system according to the present invention is that it adjusts itself to prevailing external and internal circumstances, leading to safer transport and greater driver acceptance. In addition, the self-explanatory presentation of detection and warning strategies for the driver enables him/her to know how the whole alarm system will work, thereby also enhancing comprehension and acceptance.

The present invention thus relates to an improved monitoring system for a vehicle which is adaptable to each unique situation for the vehicle and which is generally applicable in that it does not depend on the particular type of sensors used. This is a major advantage owing to continual technical advances in the sensor field which make it possible to detect intrusion at an early stage, leading also to future requirements for detection strategies, warning procedures and display and setting facilities.

### Brief description of the drawings

Figure 1 is a schematic block diagram illustrating the present invention.
Figure 2 is a schematic diagram of a vehicle in which the present invention is implemented.
Figure 3 is an example of a state diagram illustrating an implementation of the present invention.

### Detailed description of preferred embodiments of the invention

In brief, the monitoring system may be divided into three general aspects:
1 - Monitoring zones for the vehicle
2 - Detection strategy
3 - Warning strategy

These are discussed in more detail below.

### 1 - Monitoring zones for the vehicle

Shell protection for a vehicle, e.g. a truck, a bus or a passenger car, is necessary to protect its cargo when the vehicle is unsupervised and to protect the driver when he/she is on board, e.g. at night.

There are general forms of shell protection which provide basic shell protection for the vehicle.

There are points on a vehicle which are particularly vulnerable, e.g. the driving cab, the fuel tank and the cargo space.

According to the present invention, the vehicle is divided into a number of detection zones in which different detection strategies and warning strategies are applied. These strategies may be combined with one another to achieve optimum shell protection for each specific situation.

Each zone may thus have tailor-made sensitivity depending on what the zone comprises. For example, the driving cab may have a significantly higher degree of sensitivity, i.e. generate positive detection significantly more readily than a zone with lower sensitivity.

Other points on the vehicle which may have zones of their own are those relating to the fuel tank and the cargo space doors.

Each zone is provided with one or more sensors adapted to detecting predetermined objects and changes in the surroundings.

The present invention is not confined to using a particular type of sensor, as it is generally applicable for all types of sensors adapted to delivering output signals which represent each possible attempt at intrusion into or interference with the vehicle. The following are examples of possible types of sensors usable within the scope of the present invention: capacitive proximity sensors, ultrasound sensors, Doppler sensors, radar sensors and photoelectric and inductive proximity sensors.

### 2 - Detection strategy

Detection strategy means the way in which a number of parameters interact to generate a positive detection signal.

Examples of parameters may be magnitude of sensor signal, time between detections, time between entries to and exits from the vehicle, direction of intrusion, one or more intruders and the vehicle's location (obtainable for example from GPS measurements), e.g. the vehicle being in an area classified as being of high risk may affect detection strategy by increasing the sensitivity.

Detection strategy is dynamic, meaning that it changes over time.

### 3 - Warning strategy

Warning strategy means how warnings and alarms are generated.

Warning strategy depends inter alia on one or more from among relevant monitoring zone, relevant detection strategy, the vehicle's location (obtainable for example from GPS measurements), e.g. the vehicle being in an area classified as being of high risk may affect warning strategy.

Warnings and alarms may cause one or more of the following: lighting to switch on in or round the vehicle, acoustic alarms to be generated, information to be sent to an operating centre, to the driver, to police etc.

Warning strategies are likewise dynamic, which means that they may change over time.

The invention is described below in detail with reference to the drawings.

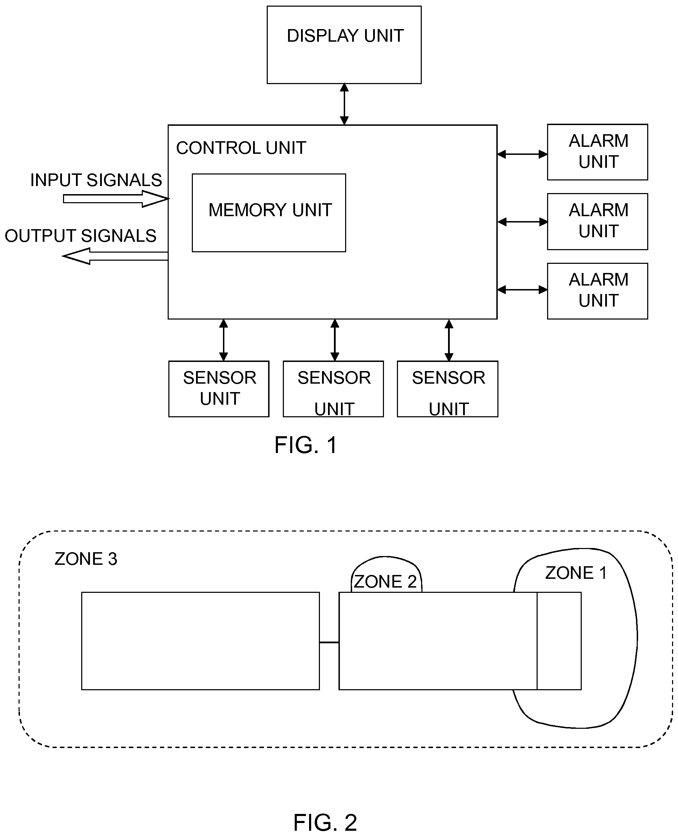

Figure 1 is a schematic block diagram illustrating a monitoring system intended for a vehicle according to the present invention and adapted to providing shell protection or monitoring for the vehicle such that attempts at intrusion can be detected and alarms be generated via one or more alarm units. The system comprises a control unit with a memory unit and is adapted to communicating with a number of sensor units disposed on the vehicle, and the sensor units define at least two monitoring zones.

The alarm units comprise for example one or more sound-emitting units, e.g. a siren, and one or more light-emitting units, e.g. the vehicle's position lamps and interior lighting. They may also comprise units which effect signalling to an external alarm centre.

The sensor units comprise one or more inductive sensors, capacitive sensors, IR-sensitive sensors, ultrasound sensors etc. which communicate with the control unit via wired connections or wirelessly.
The monitoring system according to the invention is further adapted to implementing detection strategies and warning strategies for the monitoring zones. A detection strategy is thus a set of rules which control detection in a monitoring zone, and a warning strategy is a set of rules which control how alarms are generated by the system. These rules are stored in the memory unit.

The control unit is further adapted to allocating to each of the monitoring zones a detection strategy and a warning strategy. According to a preferred embodiment, these are dynamically configured and are implemented by means of state diagrams stored in the memory unit. Each monitoring zone preferably has an allocated state diagram configured according to the criteria which are predetermined for that zone.

The control unit is also adapted to receiving one or more input signals which contain one or more strategy parameters, and the detection and/or warning strategies are adapted to being changed dynamically, continuously and adaptively according to said strategy parameters.

When the control unit has to implement a given detection strategy or warning strategy, it does so by generating control signals to the sensor units and the alarm units according to relevant detection and warning strategies. This may for example entail the control unit generating control signals to the sensor units to alter the sensitivity, or generating control signals to the alarm units to generate an alarm of a predetermined kind.

According to a preferred embodiment, the detection and/or warning strategies for a zone are adapted to being changed independently of strategies adopted for other zones.

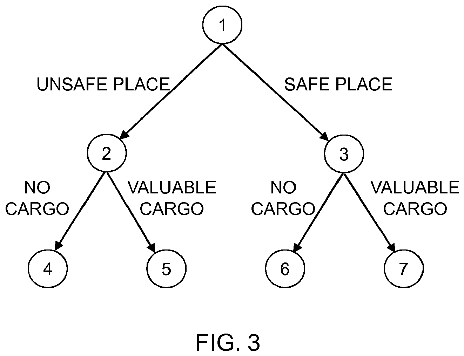

According to another embodiment, the detection and/or warning strategies for a zone are adapted to being changed according to strategies adopted for one or more other zones. An example of this is that when a driver overnighting in his/her vehicle wakes in the morning, the sensitivity of the sensor units in zone 1 (see Figure 2; driving cab) decreases and hence the sensitivity in zone 3 (see Figure 3; shell protection) may also decrease.

The following are examples of strategy parameters:
Vehicle location: safe or unsafe area.
Vehicle locks: vehicle locked or unlocked.
Vehicle movement: vehicle stationary or in motion.
Ignition status: ignition on or off.
Alarm status: door alarms on or off.
Cargo status: vehicle laden or unladen.
Driver presence: driver in vehicle or not in vehicle.
Driver status: driver awake or asleep.
Manually set alarm levels: e.g. "low", "medium" or "high".
Time scope for entries/exits through zone: long or short.

The strategy parameters are received by the control unit in the form inter alia of input signals from other systems in the vehicle, e.g. related to various operating systems (engine, brakes, vehicle speed) and from systems outside the vehicle, e.g. location signals via GPS. These signals are preferably available in a general bus system and are monitored or identified in a known way. The monitoring system delivers to the vehicle's bus system output signals in the form of, for example, various status signals for the alarm and sensor units, and alarm signals, e.g. for passing on to an external alarm centre.

According to a preferred embodiment, the monitoring system comprises a display unit which provides visual presentation of the vehicle's monitoring zones and the detection and warning strategies which apply to each zone. This is presented on a display in a clear and self-explanatory way, which is important inter alia for encouraging driver acceptance of the monitoring system.

The monitoring system according to the present invention may automatically set and continuously alter the intrusion sensitivity of each monitoring zone according to relevant detection strategies and warning strategies.

According to a preferred embodiment, one of the monitoring zones is adapted to monitoring the vehicle's driving cab and is therefore allocated a detection strategy with a higher intrusion sensitivity than for other zones.

According to another embodiment, one of the monitoring zones is adapted to monitoring the vehicle's fuel tank and is therefore likewise allocated a detection strategy with a higher intrusion sensitivity than for other zones.

According to a further embodiment, one of the monitoring zones is adapted to monitoring the whole vehicle.

Each monitoring zone is monitored by one or more sensor units, and one sensor unit may cover two or more zones.

Figure 2 is a schematic diagram of a truck with trailer, indicating three zones, viz. zone 1 round the driving cab, zone 2 round the fuel tank and zone 3 which is shell protection for the whole vehicle.

Figure 3 is an example of a simple state diagram with relating strategies for the shell protection zone, corresponding to zone 3 in Figure 2.

In this example, two parameters are used to identify four different states (4-7) in which different detection and warning strategies may be used. The risk pertaining to the area may be assessed on the basis of GPS location and a database of GPS locations of previous break-ins. The other parameter concerns the value of the cargo and may be assessed on the basis of data from a so-called "fleet management system". Table 1 below, which refers to the state diagram in Figure 3, is merely a simple example of how different strategies may be chosen for each zone according to the state which the vehicle and the driver are considered to be in. The way this simple state diagram is configured makes it obvious how to construct a more extensive diagram covering more parameters and ways of measuring them.

Depending on the strategy parameters in the input signal, in this case vehicle location and cargo status, different cases are identified and each is allocated a respective state (4-7). If for example the vehicle is in an unsafe area and carrying valuable cargo (state 7), the sensor units are set to high sensitivity (detection strategy) and any alarm will trigger an alarm siren and initiate an alarm via telematics (warning strategy). In contrast, if the vehicle is in a safe area and unladen (state 4), the sensor units are set to low sensitivity (detection strategy) and any alarm will switch on position lights and cab interior lighting (warning strategy).

**Table 1**

| State | Description | Detection strategy | Warning strategy |
|---|---|---|---|
| 4 | Safe area and no cargo | Sensitivity low Contact required | 1: Switch on position lamps |
| | | | 2: Switch on cab interior lighting |
| 5 | Safe area and valuable cargo | Sensitivity high | 1: Switch on position lamps |
| | | | 2: Switch on cab |
| | | | interior lighting |
| | | | 3: Start alarm siren |
| 6 | Unsafe area and no cargo | Sensitivity high | 1: Switch on position lamps |
| | | | 2: Switch on cab interior lighting |
| 7 | Unsafe area and valuable cargo | Sensitivity high | 1: Start alarm siren |
| | | | 2: Send alarm via telematics |

The present invention is not limited to the preferred embodiments described above. Various alternatives, modifications and equivalents may be used. The above embodiments are therefore not to be regarded as limiting the invention's scope of protection defined by the attached claims.

## Claims

1. A monitoring system for a vehicle, adapted to providing shell protection for the vehicle such that attempts at intrusion are detected and alarms are generated via one or more alarm units,
which system comprises a control unit with a memory unit and is adapted to communicating with a plurality of sensor units disposed on the vehicle adapted to detecting predetermined objects and changes in the surroundings which define at least two monitoring zones, wherein the system is adapted to implementing detection strategies and warning strategies for the monitoring zones, a detection strategy being a set of rules which control detection in a monitoring zone, and a warning strategy being a set of rules which control how alarms are generated by the system and are stored in the memory unit,
that the control unit is adapted to allocating to each of the monitoring zones a detection strategy and a warning strategy,
c h a r a c t e r i s e d in that the at least two monitoring zones are zones related to different points on the vehicle
and that the control unit is adapted to receiving one or more input signals which contain one or more strategy parameters, the detection and/or warning strategies being adapted to being changed dynamically, continuously and adaptively according to said strategy parameters and wherein said one or more input signals are in the form of input signals available in the vehicle's general bus system received from other operating systems in or outside the vehicle, whereby the intrusion sensitivity of each vehicle related monitoring zone is set automatically and altered continuously according to detection strategy and warning strategy.

2. A monitoring system according to claim 1, in which the system's detection strategies and/or warning strategies are dynamically configured by means of state diagrams stored in the memory unit.

3. A monitoring system according to claim 1 or 2, in which the control unit is adapted to generating control signals to the sensor units and the alarm units according to relevant detection and warning strategies.

4. A monitoring system according to any one of the foregoing claims, in which the control unit is adapted to generating control signals to the sensor units to alter the sensitivity.

5. A monitoring system according to any one of the foregoing claims, in which the control unit is adapted to generating control signals to the alarm units to generate an alarm of a predetermined kind.

6. A monitoring system according to any one of the foregoing claims, in which the detection and/or warning strategies for a zone are adapted to being changed independently of strategies adopted for other zones.

7. A monitoring system according to any one of claims 1-5, in which the detection and/or warning strategies for a zone are adapted to being changed according to strategies adopted for one or more other zones.

8. A monitoring system according to any one of the foregoing claims, in which said strategy parameters comprise one or more from among vehicle location, driver presence, value of cargo, predetermined time scope, vehicle speed, ignition and status, and manual inputs.

9. A monitoring system according to any one of the foregoing claims, which system also comprises a display unit for viewing of monitoring zones and their detection and warning strategies.

10. A monitoring system according to any one of the foregoing claims, in which one of the monitoring zones is adapted to monitoring the vehicle's driving cab and is therefore allocated a detection strategy with higher intrusion sensitivity than for other zones.

11. A monitoring system according to any one of the foregoing claims, in which one of the monitoring zones is adapted to monitoring the vehicle's fuel tank and is therefore allocated a detection strategy with higher intrusion sensitivity than for other zones.

12. A monitoring system according to any one of the foregoing claims, in which a further one of the monitoring zones is adapted to monitoring the whole vehicle.

## Patentansprüche

1. Überwachungssystem für ein Fahrzeug, das zur Bereitstellung eines Schutzes der Karosserie des Fahrzeugs so eingerichtet ist, dass Eindring-/Einbruchversuche detektiert und Alarme über eine oder mehrere Alarmeinheiten erzeugt werden, wobei das System eine Steuereinheit mit einer Speichereinheit aufweist und zur Kommunikation mit einer am Fahrzeug angeordneten Mehrzahl von Sensoreinheiten eingerichtet ist, die zum Detektieren vorgegebener Objekte und Änderungen der Umgebung eingerichtet sind, die mindestens zwei Überwachungszonen definiert, wobei das System zum Implementieren von Detektionsstrategien und Warnstrategien für die Überwachungszonen eingerichtet ist, wobei eine Detektionsstrategie ein Regelsatz ist, nach dem die Detektion in einer Überwachungszone gesteuert wird, und eine Warnstrategie ein Regelsatz ist, nach dem gesteuert wird, wie die Alarme vom System erzeugt und in der Speichereinheit gespeichert werden,
wobei die Steuereinheit dazu eingerichtet ist, jeder der Überwachungszonen eine Detektionsstrategie und eine Warnstrategie zuzuordnen,
**dadurch gekennzeichnet, dass** die mindestens zwei Überwachungszonen Zonen sind, die verschiedene Punkte des Fahrzeugs betreffen,
und dass die Steuereinheit eingerichtet ist, ein oder mehrere Eingangssignale zu empfangen, die einen oder mehrere Strategieparameter enthalten, wobei die Detektions-/Warnstrategien zur dynamischen, kontinuierlichen und adaptiven Änderung entsprechend den Strategieparametern eingerichtet sind, und wobei das eine oder die mehreren Eingangssignale als Eingangssignale im allgemeinen Bussystem des Fahrzeugs bereitgestellt werden, die von anderen Betriebssystemen im oder außerhalb des Fahrzeugs empfangen werden, wobei die Empfindlichkeit gegen Eindringen/Einbruch in jeder fahrzeugbezogenen Überwachungszone automatisch eingestellt und entsprechend der Detektionsstrategie und der Warnstrategie kontinuierlich geändert wird.

2. Überwachungssystem nach Anspruch 1, wobei die Detektionsstrategien und/oder Warnstrategien des Systems mittels in der Speichereinheit gespeicherten Zustandsdiagrammen dynamisch konfiguriert werden.

3. Überwachungssystem nach Anspruch 1 oder 2, wobei die Speichereinheit zum Erzeugen von Steuersignalen an die Sensoreinheiten und die Alarmeinheiten entsprechend relevanten Detektions- und Warnstrategien eingerichtet ist.

4. Überwachungssystem nach einem der vorigen Ansprüche, wobei die Speichereinheit zum Erzeugen von Steuersignalen an die Sensoreinheiten zum Ändern der Empfindlichkeit eingerichtet ist.

5. Überwachungssystem nach einem der vorigen Ansprüche, wobei die Speichereinheit zum Erzeugen von Steuersignalen an die Alarmeinheiten eingerichtet ist, um einen Alarm einer vorgegebenen Art zu erzeugen.

6. Überwachungssystem nach einem der vorigen Ansprüche, wobei die Detektions- und/oder Warnstrategien für eine Zone zur unabhängigen Änderung der Strategien eingerichtet sind, die für andere Zone eingerichtet sind.

7. Überwachungssystem nach einem der Ansprüche 1 bis 5, wobei die Detektions- und/oder Warnstrategien für eine Zone zur Änderung entsprechend den Strategien eingerichtet sind, die für eine oder mehrere andere Zonen eingerichtet sind.

8. Überwachungssystem nach einem der vorigen Ansprüche, wobei die Strategieparameter einen oder mehrere Parameter unter Fahrzeugposition, Präsenz des Fahrers, Wert der Ladung, vorgegebener Zeitraum, Fahrzeuggeschwindigkeit, Zündung und Status sowie manuelle Eingaben aufweisen.

9. Überwachungssystem nach einem der vorigen Ansprüche, wobei das System außerdem eine Anzeigeeinheit zum Betrachten der Überwachungszonen und ihrer Detektions- und Warnstrategien aufweist.

10. Überwachungssystem nach einem der vorigen Ansprüche, wobei eine der Überwachungszonen zum Überwachen der Fahrerkabine des Fahrzeugs eingerichtet ist und ihr deshalb eine Detektionsstrategie mit höherer Empfindlichkeit gegen Eindringen/Einbruch zugeordnet ist als anderen Zonen.

11. Überwachungssystem nach einem der vorigen Ansprüche, wobei eine der Überwachungszonen zum Überwachen des Kraftstofftanks des Fahrzeugs eingerichtet ist und ihr deshalb eine Detektionsstrategie mit höherer Empfindlichkeit gegen Eindringen/Einbruch zugeordnet ist als anderen Zonen.

12. Überwachungssystem nach einem der vorigen Ansprüche, wobei eine weitere der Überwachungszonen zur Überwachung des gesamten Fahrzeugs eingerichtet ist.

## Revendications

1. Système de surveillance pour un véhicule, adapté pour assurer la protection de la coque du véhicule de telle sorte que des tentatives d'intrusion soient détectées et des alarmes générées via une ou plusieurs unités d'alarme,
lequel système comprend une unité de commande dotée d'une unité mémoire et est adapté pour communiquer avec une pluralité d'unités capteurs disposées sur le véhicule et conçues pour détecter des objets et changements prédéterminés dans les alentours, lesquelles définissent au moins deux zones de surveillance,
le système étant adapté pour mettre en oeuvre des stratégies de détection et stratégies d'alerte pour les zones de surveillance, une stratégie de détection étant un ensemble de règles qui commandent la détection dans une zone de surveillance, et une stratégie d'alerte étant un ensemble de règles qui commandent la manière dont les alarmes sont générées par le système et stockées dans l'unité mémoire,
l'unité de commande étant adaptée pour attribuer à chacune des zones de surveillance une stratégie de détection et une stratégie d'alerte,
**caractérisé en ce que** les au moins deux zones de surveillance sont des zones concernant différents points du véhicule,
et **en ce que** l'unité de commande est adaptée pour recevoir un ou plusieurs signaux d'entrée qui contiennent un ou plusieurs paramètres de stratégie, les stratégies de détection et/ou d'alerte étant adaptées pour être modifiées de façon dynamique, continue et adaptative selon lesdits paramètres de stratégie et lesdits un ou plusieurs signaux d'entrée ayant la forme de signaux d'entrée disponibles dans le système de bus général du véhicule, reçus d'autres systèmes d'exploitation dans ou à l'extérieur du véhicule, la sensibilité à l'intrusion de chaque zone de surveillance relative au véhicule étant réglée automatiquement et modifiée en continu selon la stratégie de détection et la stratégie d'alerte.

2. Système de surveillance selon la revendication 1, dans lequel les stratégies de détection et/ou les stratégies d'alerte du système sont configurées de façon dynamique au moyen de diagrammes d'état stockés dans l'unité mémoire.

3. Système de surveillance selon la revendication 1 ou 2, dans lequel l'unité de commande est adaptée pour générer des signaux de commande aux unités capteurs et aux unités d'alarme en fonction des stratégies de détection et d'alerte concernées.

4. Système de surveillance selon l'une quelconque des revendications précédentes, dans lequel l'unité de commande est adaptée pour générer des signaux de commande aux unités capteurs pour modifier la sensibilité.

5. Système de surveillance selon l'une quelconque des revendications précédentes, dans lequel l'unité de commande est adaptée pour générer des signaux de commande aux unités capteurs pour générer une alarme d'un type prédéterminé.

6. Système de surveillance selon l'une quelconque des revendications précédentes, dans lequel les stratégies de détection et/ou d'alerte pour une zone sont adaptées pour être modifiées indépendamment de stratégies adoptées pour d'autres zones.

7. Système de surveillance selon l'une quelconque des revendications 1 à 5, dans lequel les stratégies de détection et/ou d'alerte pour une zone sont adaptées pour être modifiées en fonction de stratégies adoptées pour une ou plusieurs autres zones.

8. Système de surveillance selon l'une quelconque des revendications précédentes, dans lequel lesdits paramètres de stratégie comprennent un ou plusieurs des paramètres suivants : emplacement du véhicule, présence du conducteur, valeur de la cargaison, étendue temporelle prédéterminée, vitesse du véhicule, allumage et état, et entrées manuelles.

9. Système de surveillance selon l'une quelconque des revendications précédentes, lequel système comprend également une unité d'affichage permettant de visionner les zones de surveillance et leurs stratégies de détection et d'alerte.

10. Système de surveillance selon l'une quelconque des revendications précédentes, dans lequel l'une des zones de surveillance est adaptée pour surveiller la cabine de conduite du véhicule et, par conséquent, fait l'objet d'une stratégie de détection dont la sensibilité à l'intrusion est plus élevée que pour d'autres zones.

11. Système de surveillance selon l'une quelconque des revendications précédentes, dans lequel l'une des zones de surveillance est adaptée pour surveiller le réservoir d'essence du véhicule et, par conséquent, fait l'objet d'une stratégie de détection dont la sensibilité à l'intrusion est plus élevée que pour d'autres zones.

12. Système de surveillance selon l'une quelconque des revendications précédentes, dans lequel une autre des zones de surveillance est adaptée pour surveiller l'ensemble du véhicule.
